# EUROPEAN PATENT APPLICATION

(11) **EP 1 547 988 A1**
(43) Date of publication of application: **29.06.2005**
(21) Application number: 03798373.1
(22) Date of filing: 31.07.2003
(51) Int. Cl.: C04B 35/38

(54) **FERRITE MATERIAL**

(30) Priority: 26.09.2002 JP 2002280545; 27.12.2002 JP 2002382476; 10.07.2003 JP 2003195397; 10.07.2003 JP 2003195398
(71) Applicant: TDK Corporation, Chuo-ku, Tokyo 103-8272 (JP)
(72) Inventor: TAKAGAWA, Kenya, c/o TDK CORPORATION, Chuo-ku, Tokyo 103-8272 (JP); FUKUCHI, Eiichiro, c/o TDK CORPORATION, Chuo-ku, Tokyo 103-8272 (JP); MURASE, Taku, c/o TDK CORPORATION, Chuo-ku, Tokyo 103-8272 (JP)
(74) Representative: HOFFMANN EITLE
(86) International application number: PCT/JP2003/009735
(87) International publication number: WO 2004/028997

(57) **Abstract**

A Mn-Zn based ferrite sintered body containing 62 to 68 mol% of Fe₂O₃ and 12 to 20 mol% of ZnO is made to contain, as main constituents, NiO and/or LiO_{0.5}. Additionally, a Mn-Zn based ferrite sintered body containing 62 to 68 mol% of Fe₂O₃ and 12 to 23 mol% of ZnO is made to contain, as additives, Si and Ca.

This sintered body can achieve such properties that the saturation magnetic flux density at 100°C is 450 mT or more (magnetic field for measurement: 1194 A/m), the minimum core loss value is 1200 kW/m³ or less (measurement conditions: 100 kHz, 200 mT), the bottom temperature at which the minimum core loss value is exhibited is from 60 to 130°C, and the initial permeability at room temperature is 700 or more.

## Description

### Technical Field

The present invention relates to a ferrite material which can be suitably used as electronic components for transformers, reactors, choke coils and the like.

### Background Art

In these years, downsizing and high powering of electronic devices have been promoted. Accordingly, high density integration and high speed processing of various components have progressed, and thus power supply lines are demanded to supply large electric current.

Additionally, even under high temperatures, demanded are power supply lines which can maintain the predetermined performances. This is because power supply lines are exposed to heat emitted by components (for example, CPU) as the case may be. Additionally, power supply lines are required to maintain predetermined performances under such conditions that the environmental temperature is high as in automobile electronic circuits.

Accordingly, transformers and reactors to be used in power supply lines are also required to be capable of being used with large current even under high temperatures.

As the materials to be used for these transformers and reactors, soft magnetic metal materials and ferrite materials can be cited. Additionally, ferrite materials are classified into Mn-Zn based ferrites and Ni based ferries.

Soft magnetic metal materials are higher in saturation magnetic flux density than ferrites, and hence cause no magnetic saturation even for large currents flowing therethrough. However, there are problems in that soft magnetic metal materials are generally high in loss, high in price, high in specific gravity, and poor in rustproof property.

On the other hand, ferrites are excellent in cost performance, and have advantage such that loss is low in a frequency range between a few 10 kHz and a few 100 kHz. Additionally, Mn-Zn based ferrites are higher in saturation magnetic flux density than Ni based ferrites. Therefore, for transformers and choke coils (hereinafter, both components are referred to as "transformers and the like," as the case maybe) for large in current, Mn-Znbased ferrites are generally used. However, in these years, there have been demanded ferrite materials exhibiting high saturation magnetic flux densities even when used in a higher temperature range, more specifically, in the vicinity of 100°C. Although Mn-Zn based ferrites exhibit saturation magnetic flux densities higher than Ni based ferrites, as described above, the saturation magnetic flux densities of the Mn-Zn based ferrites are insufficient in the high temperature region in the vicinity of 100°C (hereinafter simply referred to as "the high temperature region," as the case may be).

Thus, for the purpose of improving the saturation magnetic flux density in the high temperature region, various investigations have been carried out. For example, Japanese Patent Laid-Open No. 2000-159523 discloses a ferrite sintered body in which the content of iron oxide is 60 to 75 mol%, the content of zinc oxide is 0 to 20 mol% (not inclusive of 0) and the balance is composed of manganese oxide. This ferrite sintered body has a saturation magnetic flux density of 450 mT or more at 100°C and a minimum core loss value of 1500 kW/m³ or less under the measurement conditions of 50 kHz and 150 mT.

On the other hand, various proposals have been made also for the purpose of decreasing the loss of Mn-Zn based ferrites (see Japanese Patent Publication No. 63-59241, Japanese Patent Laid-Open Nos. 6-310321 and 11-3813, and the like). For example, Japanese Patent Publication No. 63-59241 discloses a ferrite core having a fundamental composition in which the content of manganese oxide is 13 to 50 mol%, the content of zinc oxide is 0 to 20 mol% (not inclusive of 0), the content of at least one of nickel oxide, magnesium oxide and lithium oxide is 0 to 26 mol%, and the balance is composed of 45 mol% or more of iron oxide, and being operated at high temperatures in a magnetic field of 500 G or more.

A ferrite sintered body disclosed in Japanese Patent Laid-Open No. 2000-159523 achieves a high saturation magnetic flux density even in the high temperature region by increasing the content of iron in a Mn-Zn based ferrite. However, the loss value of this ferrite sintered body is still at a high level.

Japanese Patent Laid-Open No. 2000-159523 discloses a material having a relatively low loss such that the temperature at which the loss exhibits the minimum value (in the present specification, referred to as "bottom temperature") is in the vicinity of 20°C. However, this material exhibits a positive slope for the temperature dependency of the loss in a temperature range between 60 and 130°C in which common transformers and cores for use in common reactors are used. Consequently, this material has a risk of thermal runaway caused by self-heating.

The aforementioned ferrite core disclosed in Japanese Patent Publication No. 63-59241 has attempted to achieve lowering of loss in the temperature range of 150°C or higher. However, in Japanese Patent Publication No. 63-59241, merely the lowering of loss has been investigated, but no investigation has been carried out for the purpose of improving the saturation magnetic flux density. Additionally, the ferrite core disclosed in Japanese Patent Publication No. 63-59241 has a bottom temperature of 150°C or higher. Consequently, in the temperature range (60 to 130°C) in which common transformers and the like are used, the initial permeability is eventually degraded and the loss is eventually increased. The ferrite materials disclosed in Japanese Patent Laid-Open Nos. 6-310321 and 11-3813 have not been able to be simultaneously provided with the properties involving the saturation magnetic flux density in the high temperature region and the loss.

The present invention has been achieved in view of these technical problems, and takes as its obj ect to provide a ferrite material having a high saturation magnetic flux density in the high temperature region in the vicinity of 100°C and a low loss. Moreover, the present invention takes as its object to provide a ferrite material having a bottom temperature falling within the temperature range (60 to 130°C) in which common transformers and the like are used.

### Disclosure of the Invention

The present inventor has succeeded in obtaining a ferrite material which has a high saturation magnetic flux density and a low loss in the high temperature region, by selecting the constituents composing the ferrite material and the contents of the constituents. This ferrite material comprises a sintered body comprising, as main constituents, 62 to 68 mol% of Fe₂O₃, 12 to 20 mol% of ZnO, 0.2 to 5 mol% of NiO, and the balance substantially being MnO, the ferrite material being characterized in that the saturation magnetic flux density at 100°C is 450 mT or more (magnetic field for measurement: 1194 A/m), and the minimum core loss value is 1200 kW/m³ or less (measurement conditions: 100 kHz, 200 mT).

Additionally, the present inventors have found that inclusion of a predetermined amount of Li as a constituent composing the ferrite material improves the saturation magnetic flux density in the high temperature region. More specifically, the present invention provides a ferrite material characterized in that the ferrite material comprises a sintered body comprising, as the main constituents, 62 to 68 mol% of Fe₂O₃, 12 to 20 mol% of ZnO, less than 4 mol% (not inclusive of 0) of LiO_{0.5}, and the balance substantially being MnO. According to the investigation of the present inventor, inclusion of Li lowers the saturation magnetic flux density at room temperature. However, surprisingly, the content of Li within the range recommended by the present invention improves the saturation magnetic flux density in the high temperature region. Incidentally, the Li oxide is designated as Li₂O, but in the present invention, the Li oxide is designated as "LiO_{0.5}" because the composition is calculated in terms of Li.

In the Mn-Zn ferrite material of the present invention, the content of LiO_{0.5} in the sintered body is preferably 0.2 to 3 mol%. The content of LiO_{0.5} falling within the range between 0.2 and 3 mol% can further improve the saturation magnetic flux density in the high temperature region.

Moreover, the present invention also provides a Mn-Zn-Ni-Li based ferrite material characterized in that the ferrite material comprises, as the constituents composing the ferrite material, both a predetermined content of Ni and a predetermined content of Li. This Mn-Zn-Ni-Li based ferrite material comprises a sintered body comprising, as main constituents, 62 to 68 mol% of Fe₂O₃, 12 to 20 mol% of ZnO, 5 mol% or less (not inclusive of 0) of NiO, less than 4 mol% (not inclusive of 0) of LiO_{0.5}, and the balance substantially being MnO. According to the investigation of the present inventor, inclusion of Ni and Li in combination can improve the saturation magnetic flux density while the core loss is being suppressed.

The above described ferrite materials of the present invention preferably comprises, as first additives, 250 ppm or less (not inclusive of 0) of Si in terms of SiO₂ and 2500 ppm or less (not inclusive of 0) of Ca in terms of CaCO₃. Inclusion of the first additives is effective for any of the Mn-Zn-Ni based ferrite material, the Mn-Zn-Li based ferrite material and the Mn-Zn-Ni-Li based ferrite material of the present invention.

Although in the above description, the Mn-Zn -Ni based ferrite material, the Mn-Zn-Li based ferrite material and the Mn-Zn-Ni-Li based ferrite material, all comprising Ni and/or Li as a main constituent have been described among the ferrite materials of the present invention, the above described inclusion of the first additives is also effective in Mn-Zn based ferrite materials not comprising Ni as a main constituent. More specifically, the present invention provides a ferrite material comprising a sintered body comprising, as main constituents, 62 to 68 mol% of Fe₂O₃, 12 to 23 mol% of ZnO, and the balance substantially being MnO, the ferrite material being characterized in that the ferrite material comprises, as first additives, 80 to 250 ppm of Si in terms of SiO₂ and 800 to 2500 ppm of Ca in terms of CaCO₃, and has a saturation magnetic flux density at 100°C of 450 mT or more (magnetic field for measurement: 1194 A/m) and a minimum core loss value of 1200 kW/m³ or less (measurement conditions: 100 kHz, 200 mT). By making the contents of the main constituents fall within the above described ranges, and by comprising predetermined contents of Si and Ca in a ferrite material, there can be obtained a ferrite material which has a high saturation magnetic flux density in the high temperature region and a low loss, even in such a composition system that does not comprise, as main constituents, Ni and/or Li.

It is to be noted that, when Si and Ca are comprised as first additives, it is effective that the contents of Si and Ca are set respectively in terms of SiO₂ and CaCO₃ so as for the ratio SiO₂/CaCO₃ (weight ratio) to be 0.04 to 0.25.

The aforementioned ferrites materials of the present invention, namely, the Mn-Zn-Ni based ferrite material, the Mn-Zn-Li based ferrite material, the Mn-Zn-Ni-Li based ferrite material, and the Mn-Zn based ferrite material (hereinafter, collectively referred to as "the ferrite material of the present invention," except for the case where the Mn-Zn-Ni based ferrite material, the Mn-Zn-Li based ferrite material, the Mn-Zn-Ni-Li based ferrite material, and the Mn-Zn based ferritematerial are distinguished fromeach other) preferably further comprise, as second additives, one or more of Nb₂O₅: 400 ppm or less (not inclusive of 0), ZrO₂: 1000 ppm or less (not inclusive of 0), Ta₂O₅: 1000 ppm or less (not inclusive of 0), In₂O₅: 1000 ppm or less (not inclusive of 0), and Ga₂O₅: 1000 ppm or less (not inclusive of 0).

Yet additionally, the ferrite material of the present invention can further comprise, as third additives, one or two of SnO₂: 10000 ppm or less (not inclusive of 0) and TiO₂: 10000 ppm or less (not inclusive of 0).

Now, for the purpose of achieving high saturation magnetic flux density in ferrite materials, it is effective to increase the content of Fe in the main composition. However, as the content of Fe increases, sintering hardly comes to proceed. Therefore, when an Fe-rich composition is selected, it is necessary to elevate the sintering temperature. However, if the sintering temperature is elevated, the Zn component is evaporated and the core loss is thereby increased. Moreover, the elevation of the sintering temperature leads to the increase of the energy consumption, the cost rise for the furnace material and the like, which may probably make industrial demerit. For the purpose of obtaining a ferrite material having a high saturation magnetic flux density in the high temperature region and a low loss while eliminating such demerit, the present inventors have made various investigations. Consequently, the present inventors have found that the fourth additives to be described below effectively contribute to low temperature sintering. More specifically, it is desirable that the ferrite material of the present invention comprises, as fourth additives, one or more of a P compound: 35 ppm or less (not inclusive of 0) in terms of P, MoO₃: 1000 ppm or less (not inclusive of 0), V₂O₅ : 1000 ppm or less (not inclusive of 0), GeO₂: 1000 ppm or less (not inclusive of 0), Bi₂O₃: 1000 ppm or less (not inclusive of 0), and Sb₂O₃: 3000 ppm or less (not inclusive of 0). Inclusion of these fourth additives makes it possible to carry out sintering at such a relatively low temperature as 1350°C or lower, and even in the vicinity of 1300°C. As will be described later in detail, inclusion of the fourth additives, within the respective ranges recommended by the present invention, makes it possible to obtain a ferrite material having a high saturation magnetic flux density in the high temperature region and a low loss even when sintering is made at 1350°C or lower.

The above described ferrite material of the present invention has a bottom temperature falling within the range between 60 and 130°C, the bottom temperature being the temperature at which the core loss exhibits the minimum value. In other words, the ferrite material of the present invention can set the bottom temperature to fall within the temperature range where common transformers and the like are used.

Additionally, the ferrite material of the present invention can be provided with a property such that the saturation magnetic flux density at 100°C is 480 mT or more (magnetic field for measurement: 1194 A/m).

Moreover, the ferrite material of the present invention can make the minimum core loss value equal to or less than 1200 kW/m³ (measurement conditions: 100 kHz, 200 mT), and furthermore, equal to or less than 1100 kW/m³ (measurement conditions: 100 kHz, 200 mT) while the saturation magnetic flux density at 100°C is being maintained to be 480 mT or more (magnetic field for measurement: 1194 A/m) . In this way, the ferrite material of the present invention can be simultaneously provided with the properties of the high saturation magnetic flux density in the high temperature region and the low loss.

Yet additionally, the ferrite material of the present invention is provided as a sintered body having a microcrystalline structure which has a relative density such high as 93% or more, and moreover, a mean grain size of 5 to 30 µm.

Additionally, the ferrite material of the present invention can obtain unprecedented properties such that the saturation magnetic flux density at 100°C is 500 mT or more (magnetic field for measurement: 1194 A/m), the minimum core loss value is 1000 kW/m³ or less (measurement conditions: 100 kHz, 200 mT), the bottom temperature at which the core loss exhibits the minimum value is 80 to 120°C, and the initial permeability at room temperature is 800 or more.

### Brief Description of the Drawings

FIG. 1 is a table showing the compositions, magnetic properties and the like of the ferrite cores prepared in Example 1;
FIG. 2 is a table showing the compositions, magnetic properties and the like of the ferrite cores prepared in Example 2;
FIG. 3 is a table showing the compositions, magnetic properties and the like of the ferrite cores prepared in Example 3;
FIG. 4 is a table showing the compositions, magnetic properties and the like of the ferrite cores prepared in Example 4;
FIG. 5 is a table showing the compositions, magnetic properties and the like of the ferrite cores prepared in Example 5;
FIG. 6 is a table showing the compositions, magnetic properties and the like of the ferrite cores prepared in Example 6;
FIG. 7 is a table showing the compositions, magnetic properties and the like of the ferrite cores prepared in Example 7;
FIG. 8 is a table showing the compositions, magnetic properties and the like of the ferrite cores prepared in Example 8;
FIG. 9 is a table showing the compositions, magnetic properties and the like of the ferrite cores prepared in Example 9;
FIG. 10 is a graph showing the relation between the content of LiO_{0.5} and the saturation magnetic flux density at 100°C;
FIG. 11 is a table showing the compositions, magnetic properties and the like of the ferrite cores prepared in Example 10;
FIG. 12 is a table showing the compositions, magnetic properties and the like of the ferrite cores prepared in Example 11;
FIG. 13 is a table showing the compositions, magnetic properties and the like of the ferrite cores prepared in Example 12;
FIG. 14 is a table showing the compositions, magnetic properties and the like of the ferrite cores prepared in Example 12;
FIG. 15 is a table showing the compositions, magnetic properties and the like of the ferrite cores prepared in Example 13;
FIG. 16 is a table showing the compositions, magnetic properties and the like of the ferrite cores prepared in Example 14;
FIG. 17 is a table showing the compositions, magnetic properties and the like of the ferrite cores prepared in Example 15; and
FIG. 18 is a table showing the compositions, magnetic properties and the like of the ferrite cores prepared in Example 15.

### Best Mode for Carrying Out the Invention

The embodiments of the present invention will be described below.

At the beginning, the reason for limiting the composition in the case where the ferrite of the present invention is a Mn-Zn-Ni based one will be described.

Increase of the content of Fe₂O₃ improves the saturation magnetic flux density in the high temperature region, but on the other hand, makes the core loss tend to be degraded. If the content of Fe₂O₃ is less than 62 mol%, the saturation magnetic flux density in the high temperature region decreases, while if the content of Fe₂O₃ exceeds 68 mol%, the increase of the core loss becomes remarkable. Accordingly, in the present invention, the content of Fe₂O₃ is set between 62 and 68 mol%. In this range, as the content of Fe₂O₃ is increased, the bottom temperature shifts to the higher temperature side. The content of Fe₂O₃ is preferably between 63 to 67 mol%, and more preferably 63 to 66 mol%.

The content of ZnO also affects the saturation magnetic flux density and the core loss. If the content of ZnO is less than 12 mol%, the saturation magnetic flux density decreases and the loss increases. Also, if the content of ZnO is more than 20 mol%, the saturation magnetic flux density decreases and the loss increases. Accordingly, in the present invention, the content of ZnO is set between 12 and 20 mol%. In this range, as the content of ZnO is increased, the bottom temperature shifts to the higher temperature side. The content of ZnO is preferably 13 to 19 mol%, and more preferably 14 to 18 mol%.

NiO is effective for improving the saturation magnetic flux density with increase of the Curie temperature. In order to enjoy this effect, the ferrite material of the present invention contains 0.2 mol% or more of NiO. However, if the content of NiO exceeds 5 mol%, the loss becomes large. Accordingly, in the present invention, the content of NiO is set between 0.2 and 5 mol%. The content of NiO is preferably 0.5 to 4 mol%, and more preferably 2 to 4 mol%.

The ferrite material of the present invention contains, as a main constituent, MnO as the substantial balance in addition to the above described constituents.

As described above, the reason for limiting the composition in the case where the ferrite of the present invention is a Mn-Zn-Ni based one has been described. The addition of first to fourth additives to be described below in detail are effective not only for the case of a Mn-Zn-Ni based ferrite but also for the cases of a Mn-Zn-Li based ferrite, a Mn-Zn-Ni-Li based ferrite, and a Mn-Zn based ferried not containing Ni as a main constituent.

When the ferrite material of the present invention is a Mn-Zn based one not containing Ni as a main constituent, it is preferable that the content of Fe₂O₃ is set between 62 and 68 mol%, the content of ZnO is set between 12 and 23 mol%, and the substantial balance is set to be MnO, and moreover, Si is contained as a first additive in a range equal to 250 ppm or less (not inclusive of 0) in terms of SiO₂, and Ca is contained as a first additives in a range equal to 2500 ppm or less (not inclusive of 0) in terms of CaCO₃. Inclusion of the first additives makes it possible to increase the saturation magnetic flux density while the increase of the core loss is being suppressed, even in the Mn-Zn based ferrite not containing Ni. In the case where a Mn-Zn based ferrite is a main constituent, the content of Fe₂O₃ is preferably 62 to 67 mol% and the content of ZnO is preferably 13 to 22 mol% and more preferably 63 to 67 mol%, and more preferably 15 to 21 mol%.

When the ferrite material of the present invention is a Mn-Zn-Li based one, the content of Fe₂O₃ is set between 62 and 68 mol%, the content of ZnO is set between 12 and 23 mol%, the content of LiO_{0.5} is set to be less than 4 mol% (not inclusive of 0), and the substantial balance is set to be MnO. LiO_{0.5} is effective for improving the saturation magnetic fluxdensity at 100°C. However, if the content of LiO_{0.5} exceeds 4 mol%, the loss becomes large and the saturation magnetic flux density at 100°C decrease to a level equal to or lower than the level prior to the addition of LiO_{0.5}. The content of LiO_{0.5} is preferably 0.2 to 3.5 mol%, and more preferably 0.5 to 3 mol%.

When the ferrite material of the present invention is a Mn-Zn-Ni-Li based one, the content of Fe₂O₃ is set between 62 and 68 mol%, the content of ZnO is set between 12 and 23 mol%, the content of NiO is set to be equal to or less than 5 mol% (not inclusive of 0), the content of LiO_{0.5} is set to be less than 4 mol% (not inclusive of 0), and the substantial balance is set to be MnO. The sum of the contents of NiO and LiO_{0.5} is preferably set between 0.2 and 5 mol%, more preferably between 0.5 and 4 mol%, further preferably between 1 and 3 mol%.

Next, the reason for limiting the additives will be described.

The ferrite material of the present invention can contain Si within a range equal to or less than 250 ppm (not inclusive of 0) in terms of SiO₂ and Ca within a range equal to or less than 2500 ppm (not inclusive of 0) in terms of CaCO₃. Si and Ca segregate on the grain boundary to form high-resistance layers and thereby contribute to decreasing the loss. In addition, Si and Ca have as sintering aids an effect for improving the density of sintered body. If the content of Si exceeds 250 ppm in terms of SiO₂ or the content of Ca exceeds 2500 ppminterms of CaCO₃, discontinuous, abnormal grain growth occurs, and degradation of the loss is large. Accordingly, in the present invention, the content of Si is set to be equal to or less than 250 ppm in terms of SiO₂, and the content of Ca is set to be equal to or less than 2500 ppm in terms of CaCO₃. On the other hand, if the content of Si is less than 80 ppm in terms of SiO₂ or the content of Ca is less than 800 ppm in terms of CaCO₃, the above described effect cannot be fully obtained, so that it is preferable that Si is contained in a content of 80 ppm or more in terms of SiO₂ and Ca is contained in a content of 800 ppm or more in terms of CaCO₃. The contents of Si and Ca are preferably set between 80 and 200 ppm in terms of SiO₂ and between 1000 and 1800 ppm in terms of CaCO₃, respectively, and more preferably, between 80 and 150 ppm in terms of SiO₂ and between 1200 and 1700 ppm in terms of CaCO₃, respectively.

Additionally, when Si and Ca are added in combination, it is effective that the weight ratio (content of SiO₂/content of CaCO₃) between the content of SiO₂ and the content of CaCO₃ is set to fall within a range between 0.04 to 0.25, and more preferably between 0.05 and 0.2.

The present invention can contain as second additives one or more of Nb₂O₅: 400 ppm or less (not inclusive of 0), ZrO₂: 1000 ppm or less (not inclusive of 0), Ta₂O₅: 1000 ppm or less (not inclusive of 0), In₂O₅: 1000 ppm or less (not inclusive of 0), and Ga₂O₅: 1000 ppm or less (not inclusive of 0). Inclusion of these second additives can yield an effect such that the saturation magnetic flux density is improved and/or the loss is reduced. In order to fully enj oy this effect, the contents of Nb₂O₅, ZrO₂, Ta₂O₅, In₂O₅, and Ga₂O₅ each are preferably 50 ppm or more. The more preferable contents are as follows: Nb₂O₅: 80 to 300 ppm; ZrO₂: 200 to 800 ppm; Ta₂O₅: 200 to 800 ppm; In₂O₅: 200 to 800 ppm; and Ga₂O₅: 200 to 800 ppm. Additionally, when these second additives are added in combination, the sum of the addition contents is preferably set at 1000 ppm or less.

The present invention can contain as third additives one or two of SnO₂: 10000 ppm or less (not inclusive of 0) and TiO₂: 10000 ppm or less (not inclusive of 0). SnO₂ and TiO₂ are present inside the grains and in the grain boundaries, and have an effect of reducing loss. However, if the contents of SnO₂ and TiO₂ each exceed 10000 ppm, SnO₂ and TiO₂ cause degradation of loss and decrease of the saturation magnetic flux density, ascribable to the discontinuous abnormal grain growth. Accordingly, in the present invention, the upper limit of the content of SnO₂ and the upper limit of the content of TiO₂ are respectively set at 10000 ppm. On the other hand, in order to fully enjoy the above described effect of reducing loss, it is preferable that the third additives each are contained in a content of 500 ppm or more. The further preferable contents of the third additives are as follows: SnO₂: 1000 to 8000 ppm; and TiO₂: 1000 to 8000 ppm. The more preferable contents of the third additives are as follows: SnO₂: 1000 to 7000 ppm; and TiO₂: 1000 to 7000 ppm. Additionally, when these third additives are added in combination, the sum of the addition contents is preferably set at 10000 ppm or less.

The present invention can contain, as fourth additives, one or more of a P compound: 35 ppm or less (not inclusive of 0) in terms of P, MoO₃: 1000 ppm or less (not inclusive of 0), V₂O₅: 1000 ppm or less (not inclusive of 0), GeO₂: 1000 ppm or less (not inclusive of 0), Bi₂O₃: 1000 ppm or less (not inclusive of 0), and Sb₂O₃: 3000 ppm or less (not inclusive of 0). The fourth additives have as sintering aids an effect of improving the density of sintered body and contribute to low temperature sintering. More specifically, inclusion of the fourth additives within the ranges recommended by the present invention makes it possible to obtain a relative density of 95% or more, a saturation magnetic flux density of 450 mT or more (magnetic field for measurement: 1194 A/m), and a minimum core loss value of 1000 kW/m³ or less (measurement conditions: 100 kHz, 200 mT), even when sintering is conducted at a relatively low temperatures of 1340°C or lower, furthermore about 1300°C. In order to fully enjoy this effect, the preferable contents of MoO₃, V₂O₅, GeO₂, Bi₂O₃, and Sb₂O₃ each are 50 ppm or more. Additionally, the preferable content of a P compound in terms of P is 5 ppm or more. The more preferable contents are as follows: for MoO₃ and V₂O₅, 700 ppm or less; for GeO₂ and Bi₂O₃, 500 ppm or less; for a P compound, 25 ppm or less in terms of P; and for Sb₂O₃, 2500 ppm or less. The further preferable contents are as follows: MoO₃: 100 to 600 ppm; V₂O₅: 100 to 600 ppm; GeO₂: 100 to 400 ppm; Bi₂O₃: 100 to 400 ppm; a P compound: 5 to 20 ppm in terms of P; and Sb₂O₃: 200 to 2000 ppm. Additionally, when these fourth additives are added in combination, the sum of the additive contents is preferably set at 2500 ppm or less.

The ferrite material of the present invention can also obtain, through selecting as appropriate the above described compositions, properties such that the saturation magnetic flux density at 100°C is 450 mT or more (magnetic field for measurement: 1194 A/m), and the minimum core loss value is 1200 kW/m³ or less (measurement conditions: 100 kHz, 200 mT). Furthermore, it is possible that the saturation magnetic flux density at 100°C is 480 mT or more (magnetic field for measurement: 1194 A/m), and the minimum core loss value is 1100 kW/m³ or less (measurement conditions: 100 kHz, 200 mT) . Thorough selecting a particularly desirable composition, it is also possible to obtain hitherto unobtainable properties such that the saturation magnetic flux density at 100°C is 500 mT or more (magnetic field for measurement: 1194 A/m), and the minimum core loss value is 1000 kW/m³ or less (measurement conditions: 100 kHz, 200 mT).

The ferrite material of the present invention can set the bottom temperature in a range between 60 to 130°C, and furthermore, between 80 to 120°C. Accordingly, ferrite components using the ferrite material of the present invention can find the bottom temperatures thereof within the practical operation temperature ranges thereof. Additionally, the ferrite material of the present invention has such a high initial permeability at room temperature as 700 or more, and furthermore 800 or more.

Next, a preferred method of producing the ferrite material of the present invention will be described below.

As raw materials used as main constituents, there are used powders of oxides or powders of compounds to be converted into oxides by heating. More specifically, Fe₂O₃ powders, Mn₃O₄ powders, ZnO powders and the like can be used. Additionally, when the main constituent is a Mn-Zn-Ni based one (similarly when the main constituent is a Mn-Zn-Ni-Li based one), NiO powders and the like are prepared. Additionally, when the main constituent is a Mn-Zn-Li based one (similarly when the main constituent is a Mn-Zn-Ni-Li based one), Li₂CO₃ powders and the like are prepared. The mean particle sizes of the respective powers may be selected as appropriate in a range between 0.1 and 3.0 µm.

After the raw material powders of the main constituents have been subject to wet mixing, the mixture thus obtained is calcined. The calcination temperature may be selected to fall within a range between 800 and 1000°C. The calcination atmosphere may be nitrogen or atmospheric air. The stable calcination time may be selected as appropriate in a range between 0.5 and 5.0 hours. After calcining, the calcined substance is milled to a mean particle size of approximately between 0. 5 and 2.0 µm. In addition, in the present invention, raw materials used as main constituents are not limited to those described above, but complex oxide powders containing two or more types of metals may be used as raw materials used as main constituents. For example, an aqueous solution containing ferric chloride and Mn chloride is subjected to oxidizing roasting, so as to obtain a complex oxide powder containing Fe and Mn. This complex oxide powder may be mixed with a ZnO powder to prepare a main constituent raw material. In this case, calcining is unnecessary.

Similarly, as raw materials used as additives, there can be used powders of oxides or compounds to be converted into oxides by heating. Specifically, there can be used SiO₂, CaCO₃, Nb₂O₅, ZrO₂, Ta₂O₅, In₂O₅, Ga₂O₅, SnO₂, TiO₂, MoO₃, V₂O₅, GeQ₂, Bi₂O₃, Sb₂O₃ and the like. When a P compound is selected as a fourth additive, a powder yielding the P compound by heating, for example, a Ca₃(PO₄)₂ powder or the like can be used. Raw material powders used as these additives are mixed with powders of main constituents milled after calcining. Alternatively, after raw material powders used as additives and raw material powders used as main constituents have been mixed together, the mixed powder can be calcined.

A mixed powder consisting of main constituents and additives is granulated to smoothly carry out the following compacting step. Granulation can be carried out by use of, for example, a spray dryer. A suitable binder such as polyvinyl alcohol (PVA) is added in a small amount to the mixed powder, and the mixture is then sprayed and dried with a spray dryer. The granules thus obtained are preferably approximately between 80 and 200 µm in mean particle size.

The obtained granules are compacted into a desired form, using a press equipped with a die with a certain shape. The obtained compacted body is then sintered in the following sintering step.

In the sintering step, it is necessary that the sintering temperature and the sintering atmosphere are controlled.

The sintering temperature can be selected as appropriate in a range between 1250 and 1450°C. However, in order to fully bring forth the effect of the ferrite material of the present invention, the compacted body is preferably sintered in a range between 1300 and 1400°C.

The ferrite material according to the present invention can obtain a relative density of 93% or more, more preferably 95% or more.

The mean grain size of the ferrite material according to the present invention is preferably set in a range between 5 and 30 µm. This is because if the mean grain size is less than 5 µm, the hysteresis loss becomes large, while if the mean grain size is so large as to exceed 30 µm, the eddy current loss becomes large. The preferable mean grain size is 10 to 20 µm.

Next, the present invention will be described in more detail with reference to specific examples. Examples 1 to 6 and Example 8 relate to the Mn-Zn-Ni based ferrite. Example 7 relates to the Mn-Zn based ferrite, Examples 9 to 12 relate to the Mn-Zn-Li based ferrite, and Examples 13 to 15 relate to the Mn-Zn-Ni-Li based ferrite.

### (Example 1)

An experiment carried out for checking the preferable composition of the Mn-Zn-Ni based ferrite is described as Example 1.

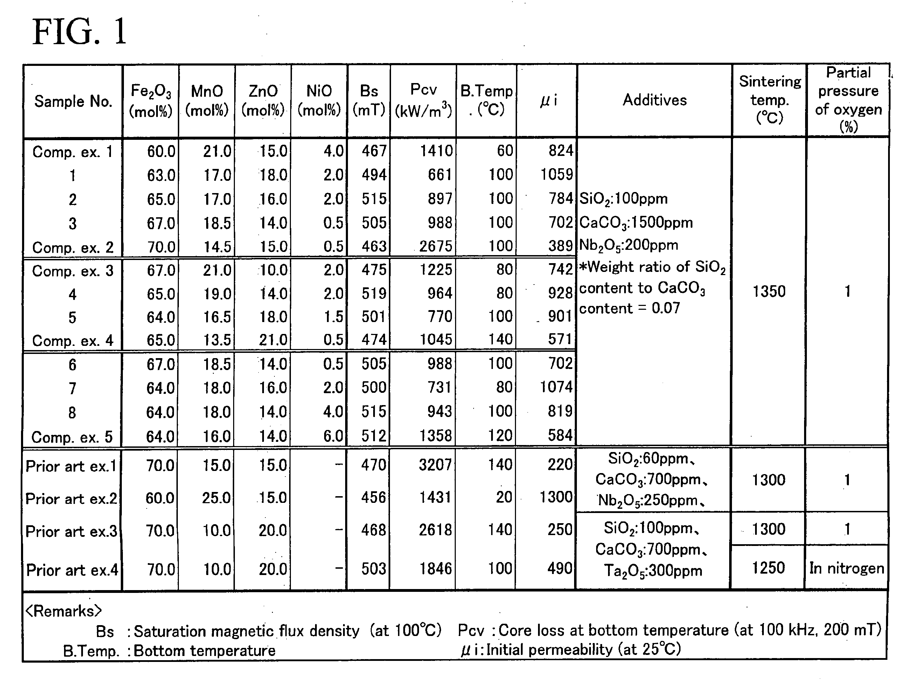

The ferrite cores having the compositions shown in FIG. 1 were prepared.

As the raw materials used as main constituents, a Fe₂O₃ powder, a MnO powder, a ZnO powder and a NiO powder were used. These powders were subjected to wet mixing, and then the mixtures were calcined at 900°C for 2 hours.

Then, the calcined substances of the raw materials used as main constituents and the raw materials used as additives were mixed together. As the raw materials used as additives, there were used a SiO₂ powder, a CaCO₃ powder, and a Nb₂O₅ powder. The raw materials used as additives were added to the calcined substances of the main constituent raw materials, and mixing was conducted while conducting milling. The milling was carried out to have a mean particle size of approximately 1.5 µm. A binder was added to each of the obtained mixtures, and the mixtures were subjected to granulation, and subjected to compacting so as to obtain toroidal compacted bodies.

The obtained compacted bodies were sintered at 1350°C (the stable period: 5 hours, the partial pressure of oxygen in the stable period: 1%) under a controlled partial pressure of oxygen, so as to obtain ferrite cores.

By use of these ferrite cores, the saturation magnetic flux densities (Bs, magnetic field for measurement: 1194 A/m) at 100°C, the minimum core loss values (Pcv, measurement conditions: 100 kHz, 200 mT), and the initial permeabilities (µi, measurement temperature: 25°C, measurement frequency: 100 kHz) were measured. The results obtained are also shown in FIG. 1. In FIG. 1, Prior Art Examples 1 to 4 present the properties and the like of the Mn-Zn based ferrite materials disclosed in Japanese Patent Laid-Open No. 2000-159523.

As shown in FIG. 1, the ferrite materials (samples Nos. 1 to 8) according to the present invention have saturation magnetic flux densities of 450 mT or more, comparable with those of Prior Art Examples 1 to 4. Moreover, the core losses of the ferrite materials according to the present invention are 1000 kW/m³ or less, and are found to be reduced largely as compared to Prior Art Examples 1 to 4. According to the present invention, saturation magnetic flux densities of 500 mT or more and the core losses of 900 kW/m³ or less can be simultaneously provided. Furthermore, saturation magnetic flux densities of 500 mT or more and core losses of 800 kW/m³ or less can be simultaneously provided.

In Comparative Example 1, samples Nos. 1, 2, and 3, and Comparative Example 2, the content of Fe₂O₃ is increased in this order. It is found that, among these examples and samples, the saturation magnetic flux densities are low and the core losses are large in the case (Comparative Example 1) in which the content of Fe₂O₃ is 60.0% to be smaller than the range of the present invention, and in the case (Comparative Example 2) in which the content of Fe₂O₃ is 70.0 mol% to be larger than the range of the present invention.

Next, in Comparative Example 3, samples Nos. 4 and 5, and Comparative Example 4, the content of ZnO is increased in this order. It is found that, among these examples and samples, the saturation magnetic flux densities are low and the core losses are large in the case (Comparative Example 3) in which the content of ZnO is 10.0 mol% to be smaller than the range of the present invention, and in the case (Comparative Example 4) in which the content of ZnO is 21.0 mol% to be larger than the range of the present invention.

From the above described results, it is found that in the case where the present invention is applied to a Mn-Zn-Ni based one, it is important to set the content of Fe₂O₃ in a range between 62 and 68 mol% and the content of ZnO in a range between 12 and 20 mol%, for the purpose of ensuring high saturation magnetic flux densities and low core losses.

In samples Nos. 6, 7, and 8, and Comparative Example 5, the content of NiO is increased in this order. As can be seen from a comparison between the samples of the present invention and Comparative Example, the variation of NiO varies the core loss and the saturation magnetic flux density.

It is necessary to set the additive amount of NiO in consideration of the fact that the saturation magnetic flux density exhibits particularly high values in the case where the content of NiO is 2.0 mol% and in the case where the content of NiO is 4.0 mol%, and the core loss of Comparative Example 5 in which the content of NiO is 6.0 mol% exceeds 1300 kW/m³. It is most desirable that the additive amount of NiO is set in the vicinity of 2 to 4 mol%.

When the attention is focused on the bottom temperature (B. Temp.), it is found that the ferrite material of the present invention can set the bottom temperature within a range between 80 and 120°C. Also, as for the initial permeability (µi), it is found that the samples of the present invention attain the values comparable with those of Prior Art Examples.

### (Example 2)

An experiment carried out for checking the preferable additive amounts of the first additives in the Mn-Zn-Ni based ferrite is described as Example 2.

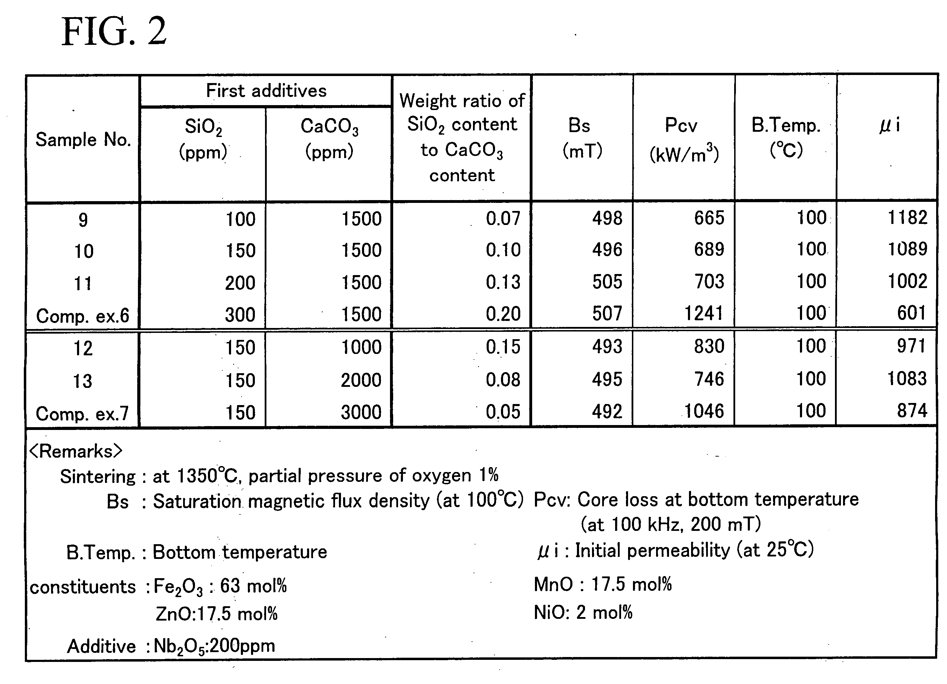

The ferrite cores having the compositions shown in FIG. 2 were prepared through the same steps as in Example 1. Additionally, the magnetic properties and the like were measured under the same conditions as in Example 1. The results obtained are also shown in FIG. 2.

As shown in FIG. 2, it is found that the addition of Si and Ca as first additives can reduce the core loss (Pcv). However, in the case of Si, when the additive amount thereof reaches 300 ppm in terms of SiO₂, the core loss increases. On the other hand, in the case of Ca, when the additive amount thereof reaches 3000 ppm in terms of CaCO₃, the core loss increases.

### (Example 3)

An experiment carried out for checking the variations of the magnetic properties and the like accompanying the addition of the second additives or the fourth additives in the Mn-Zn-Ni based ferrite is described as Example 3.

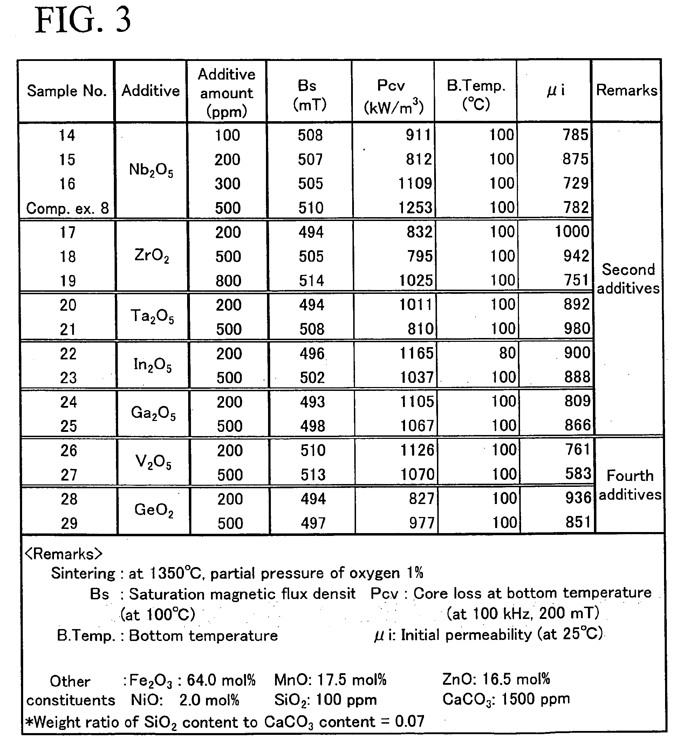

The ferrite cores having the compositions shown in FIG. 3 were prepared through the same steps as in Example 1. Additionally, magnetic properties and the like were measured under the same conditions as in Example 1. The results obtained are also shown in FIG. 3.

As shown in FIG. 3, it is found that addition of either the second additives (Nb₂O₅, ZrO₂, Ta₂O₅, In₂O₅, and Ga₂O₅) or the fourth additives (V₂O₅ and GeO₂) yields the core losses (Pcv) of 1200 kW/m³ or less while the saturation magnetic flux densities (Bs) in the vicinity of 500 mT are being maintained. Nb₂O₅, ZrO₂, and Ta₂O₅ of the second additives and GeO₂ of the fourth additives have large effect in reducing the core loss. As for Nb₂O₅, the addition thereof exceeding 400 ppm in content increases the core loss, and hence the additive amount thereof is preferably set at 400 ppm or less.

### (Example 4)

An experiment carried out for checking the variations of the magnetic properties and the like accompanying the addition of the third additives in the Mn-Zn-Ni based ferrite is described as Example 4.

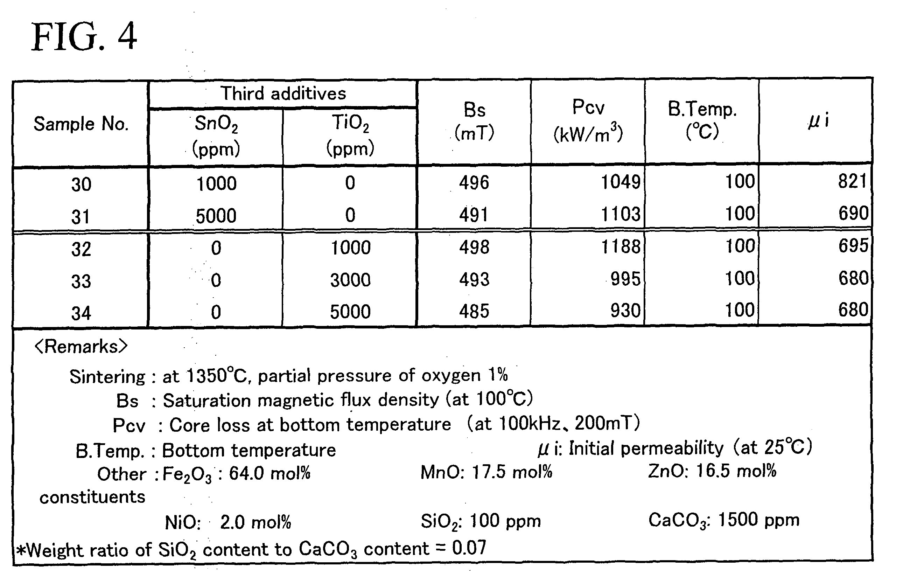

The ferrite cores having the compositions shown in FIG. 4 were prepared through the same steps as in Example 1. Additionally, magnetic properties and the like were measured under the same conditions as in Example 1. The results obtained are also shown in FIG. 4.

As shown in FIG. 4, it is found that the addition of SnO₂ or TiO₂ as third additives can reduce the core loss (Pcv). However, when the additive amounts thereof are increased, the saturation magnetic flux density (Bs) tends to be degraded. Accordingly, it is desirable that when SnO₂ or TiO₂ is added as third additive, the additive amount is set at 10000 ppm or less.

### (Example 5)

An experiment carried out for checking the variations of the magnetic properties and the like in the case where the sintering conditions are varied in the Mn-Zn-Ni based ferrite is described as Example 5.

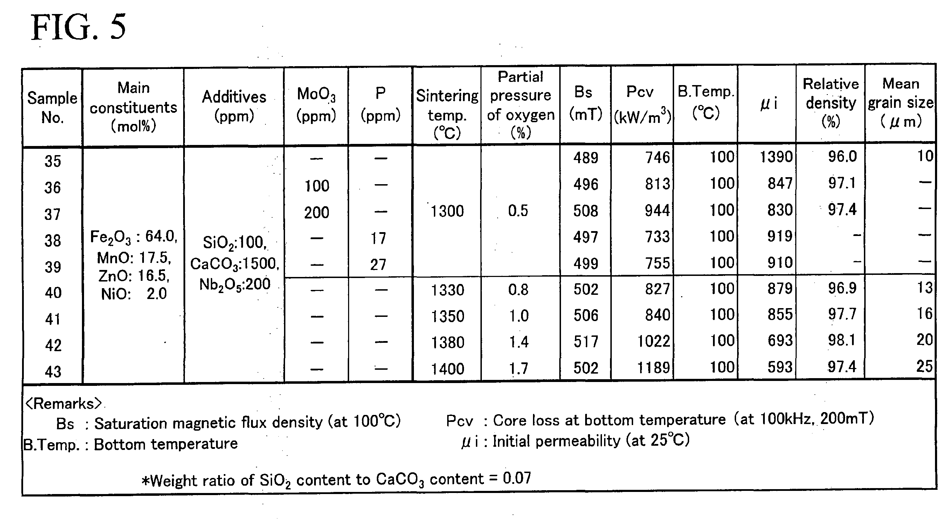

The ferrite cores having the compositions shown in FIG. 5 were prepared through the same steps as in Example 1 except that the sintering temperature and the partial pressure of oxygen in sintering were conditioned as shown in FIG. 5. Additionally, magnetic properties and the like were measured under the same conditions as in Example 1. The results obtained are also shown in FIG. 5.

As shown in FIG. 5, as the sintering temperature increases, the saturationmagnetic flux density (Bs) tends to be improved. On the other hand, as the sintering temperature increases, the core loss (Pcv) tends to increase and the initial permeability (µi) tends to decrease. Accordingly, it is desirable that the sintering temperature is set at 1380°C or lower, and more specifically, in a range between 1300 and 1380°C.

For samples Nos. 35 to 37and samples Nos. 40 to 43, relative densities were measured. For sample No. 35 and samples Nos. 40 to 43, the mean grain sizes were measured. The results obtained are also shown in FIG. 5. The ferrite cores obtained in samples 35 to 37 and samples 40 to 43 were all 95% or more in relative density. The mean grain sizes of the ferrite cores obtained in sample No. 35 and samples Nos. 40 to 43 were all in a range between 10 and 25 µm.

From the results of samples Nos. 36 to 39, it is found that MoO₃ and P as fourth additives are effective additives capable of obtaining high saturation magnetic flux density even when the sintering temperature is relatively such low as 1300°C. Consequently, it is conceivable that in the case where the fourth additives such as MoO₃ and P are added in predetermined amounts, the sintering temperature can be set at 1340°C or lower, and furthermore, approximately in a range between 1280 and 1330°C. Incidentally, the samples other than samples Nos. 38 and 39 contain P as an impurity in a content of approximately 7 ppm.

### (Example 6)

An experiment carried out for checking the variations of the magnetic properties and the like in the case where the fourth additives were added and low temperature sintering was conducted in the Mn-Zn-Ni based ferrite is described as Example 6.

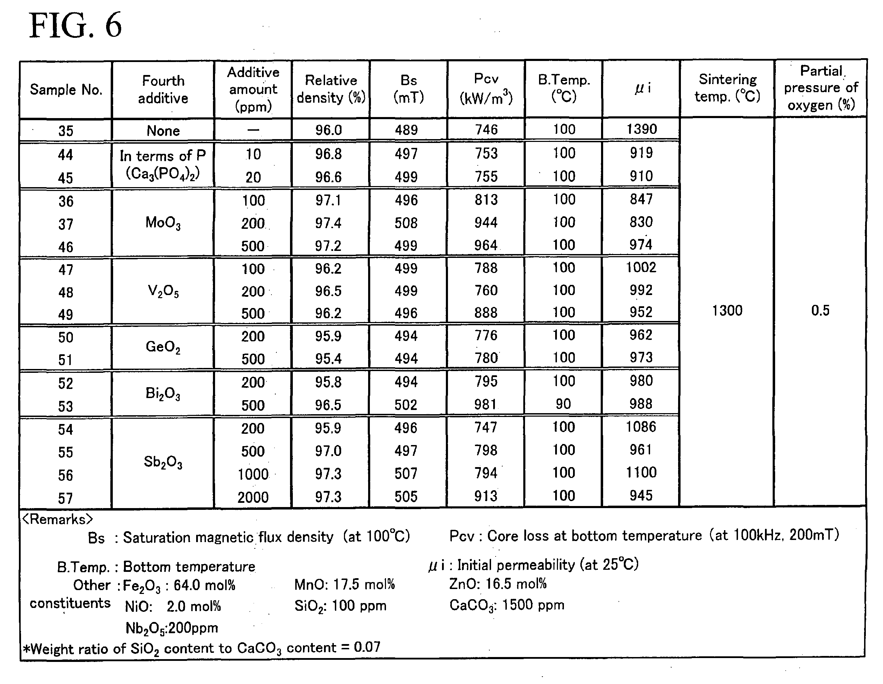

The ferrite cores having the compositions shown in FIG. 6 were prepared through the same steps as in Example 1 except that the sintering temperature was set at 1300°C, the partial pressure of oxygen in sintering was set at 0.5%, and the fourth additives were added. Additionally, magnetic properties and the like were measured under the same conditions as in Example 1. The results obtained are also shown in FIG. 6. Incidentally, the fourth additives other than P were added as oxides. As for P, P was added as calcium phosphate. In FIG. 6, the additive amount of P is presented as a value represented in terms of P. Additionally, for the convenience of comparison, FIG. 6 also shows the properties of the ferrite core (sample No. 35) without any added fourth additive and based on the sintering temperature of 1300°C and the properties of the ferrite cores (samples Nos. 36 and 37) with MoO₃ as an added fourth additive and also based on the sintering temperature of 1300°C. Incidentally, the sintering times for samples Nos. 44 to 57 were all 5 hours.

As shown in FIG. 6, addition of the fourth additives improved the saturation magnetic flux densities (Bs). More specifically, samples Nos. 36, 37, and 44 to 57 with an added fourth additive all obtained the core losses (Pcv) of 1000 kW/m³ or less. Consequently, it can be said that addition of the fourth additives is effective for improving the saturation magnetic flux density (Bs) while the increase of the core loss (Pcv) is being suppressed.

Additionally, when the attention is focused on the bottom temperature (B.Temp.), it is found that the ferrite materials according to the present invention can set the bottom temperature within a range between 80 and 120°C. Also, as for the initial permeability (µi), it is found that the ferrite materials according to the present invention obtained the values comparable with those of Prior Art Examples. Additionally, the ferrite materials according to the present invention all exhibited the relative densities of 95% or more.

From the above described results, it is found that even in the case where the sintering temperature is 1300°C, a saturation magnetic flux density (Bs) of 490 mT or more and a core loss (µi) of 1000 kW/m³ can be attained by adding the fourth additives. Additionally, it can also be verified that the bottom temperature can be set in a range between 80 and 120°C, and furthermore, within a range between 90 and 100°C.

### (Example 7)

An experiment carried out for checking the effectiveness of the addition of the fourth additives even in the Mn-Zn based ferrite not containing Ni as a main constituent is described as Example 7.

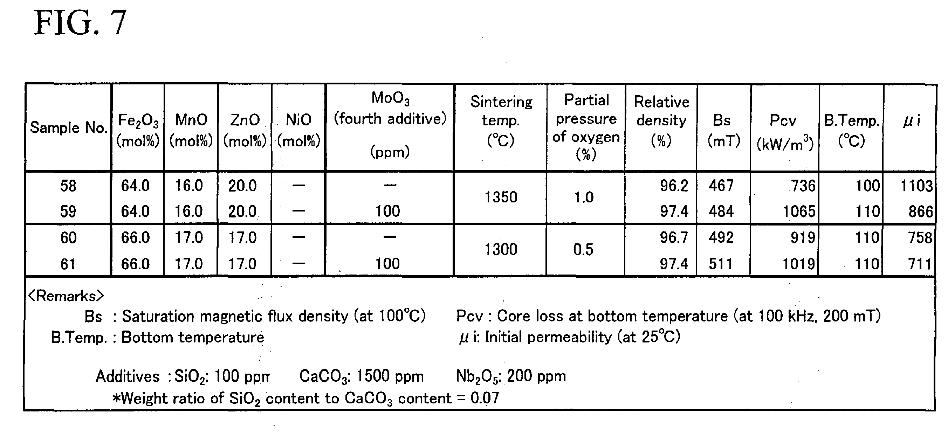

The ferrite cores having the compositions shown in FIG. 7 were prepared through the same steps as in Example 1 except that a NiO powder was not used as a raw material for a main constituent and the fourth additives were added. Additionally, magnetic properties and the like were measured under the same conditions as in Example 1. The results obtained are also shown in FIG. 7. Incidentally, the sintering times and the partial pressures of oxygen in sintering for samples Nos. 58 to 61 are also shown in FIG. 7.

As shown in FIG. 7, samples Nos. 58 and 59 were prepared under the same conditions except that MoO₃ was added to sample No. 59 as a fourth additive. A comparison between sample No. 58 and sample No. 59 shows that sample No. 59 added with MoO₃ exhibits a higher relative density and a higher saturation magnetic flux density (Bs). Consequently, it is found that even in the case where Ni is not contained as a main constituent, the addition of MoO₃ as a fourth additive can improve the relative density and the saturationmagnetic flux density (Bs).

Here, a comparison between sample No. 59 (sintering temperature: 1350°C) and sample No. 61 (sintering temperature: 1300°C), both being added with 100 ppm of MoO₃ but different in sintering temperature, reveals that sample No. 61 exhibited a saturation magnetic flux density (Bs) such high as 511 mT and a core loss (Pcv) smaller than that of sample No. 59. Accordingly, it is verified that irrespective as to whether Ni is contained or not, the addition of the fourth additive is effective for the purpose of allowing the sintering at a temperature as relatively low as 1300°C.

As described above, it is found that even in the case where Ni is not contained as a main constituent, the addition of the fourth additives contributes to the improvement of the saturation magnetic flux density (Bs) and the low temperature sintering. Additionally, it is also found that even in the case where Ni is not contained as a main constituent, the bottom temperature can be set within a range between 100 and 110°C.

### (Example 8)

An experiment carried out for checking the relation between the partial pressure of oxygen in sintering and the magnetic properties and the like in the Mn-Zn-Ni based ferrite is described as Example 8.

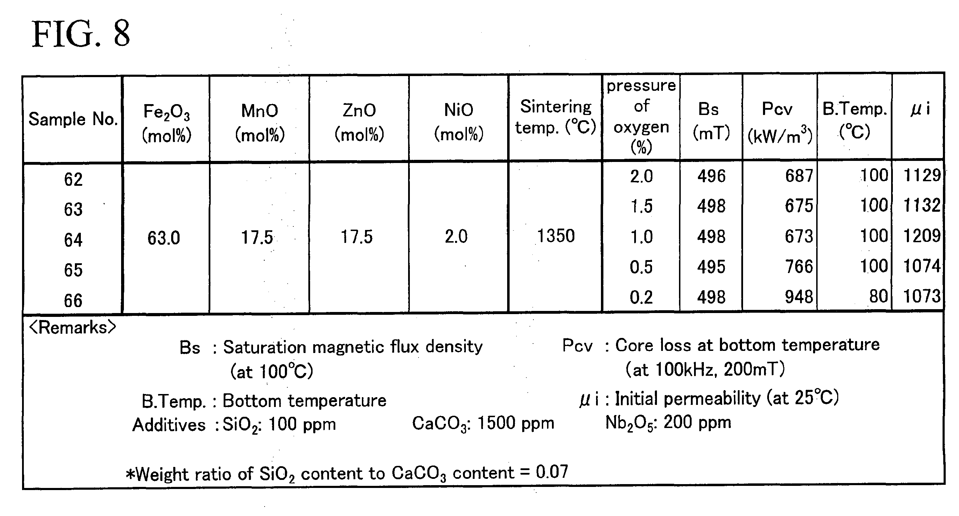

The ferrite cores having the compositions shown in FIG. 8 were prepared through the same steps as in Example 1 except that the sintering temperature and the partial pressure of oxygen in sintering were conditioned as shown in FIG. 8. Additionally, magnetic properties and the like were measured under the same conditions as in Example 1. The results obtained are also shown in FIG. 8.

In FIG. 8, inspection of samples Nos. 62 to 66 reveals that the variation of the partial pressure of oxygen in sintering leads to the variation in the core loss (Pcv). Thus, it is found that when a lower core loss is desired, the partial pressure of oxygen in sintering is preferably set at 1% or more.

### (Example 9)

An experiment carried out for checking the preferable content of Li in the Mn-Zn-Li based ferrite is described as Example 9.

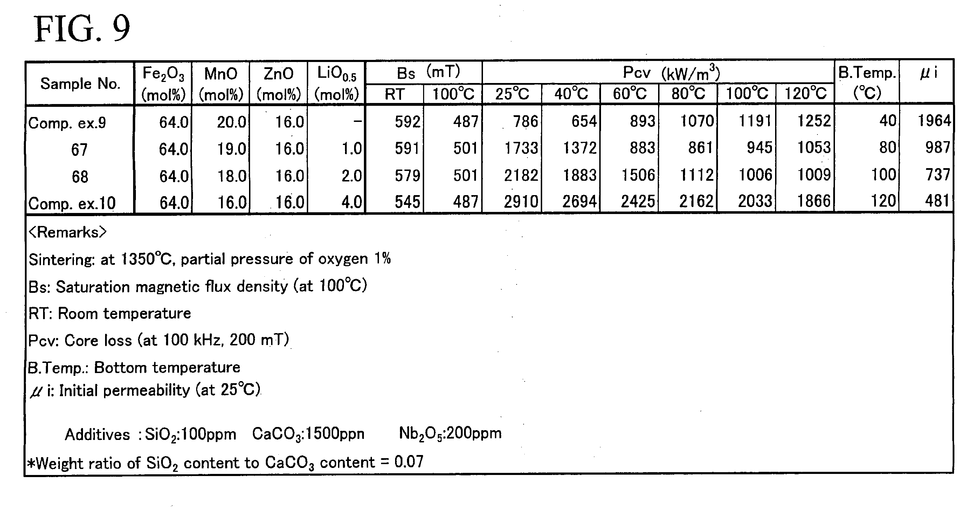

The ferrite cores (samples Nos. 67 and 68, and Comparative Example 9) having the compositions shown in FIG. 9 were prepared through the same steps as in Example 1 except that a NiO powder was not used but a Li₂CO₃ powder was used as a raw material for a main constituent. Incidentally, Comparative Example 10 was prepared under the same conditions as in samples 67 and 68 and Comparative Example 9 except that the Li₂CO₃ powder was not used as a raw material for a main constituent.

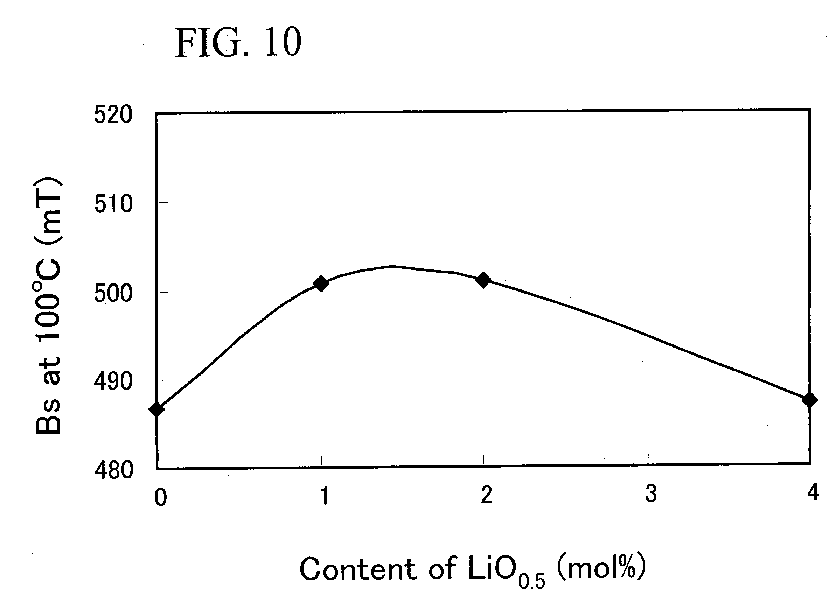

By use of these ferrite cores, the saturation magnetic flux densities (Bs, magnetic field for measurement: 1194 A/m) at room temperature and 100°C, the minimum core loss values (Pcv, measurement conditions: 100 kHz, 200 mT), the bottom temperatures (B. Temp.), and the initial permeabilities (µi, measurement temperature: 25°C, measurement frequency: 100 kHz) were measured. The results obtained are also shown in FIG. 9. Additionally, the relation between the content of LiO_{0.5} and the saturation magnetic flux density at 100°C is shown in FIG. 10.

First, attention will be focused on the saturation magnetic flux densities at 100°C.

As shown in FIGS. 9 and 10, as the content of LiO_{0.5} (hereinafter simply referred to as "the content of Li" as the case may be) increases, the saturation magnetic flux density at 100°C is gradually improved, and a saturation magnetic flux density of 500 mT or more is shown when the content of Li reaches 1 mol% or more. However, the saturation magnetic flux density reaches peak values for the content of Li of 1 to 2 mol%, and then gradually decreases in such a way that the saturation magnetic flux density for the content of Li of 4 mol% is the same value as that for the case not containing Li.

Form the above described results, it is verified that inclusion of LiO_{0.5} with a content of LiO_{0.5} of less than 4 mol%, the saturation magnetic flux density at 100°C can be set at 490 mT or more, and furthermore, 500 mT or more. The content of LiO_{0.5} is preferably 0.2 to 3.5 mol%, and further preferably 0.5 to 3 mol%.

It is to be noted that FIG. 9 shows also the saturation magnetic flux densities at room temperature together with the saturation magnetic flux densities at 100°C.

As shown in FIG. 9, the highest saturation magnetic flux density is exhibited at room temperature in the case where Li is not contained, and the saturation magnetic flux density gradually decreases as the content of Li increases. In other words, in the case where Li is contained, the variation of the saturation magnetic flux density at room temperature exhibits a trend different from the trend in the above described case at 100°C.

From a comparison between the saturation magnetic flux densities at room temperature and the saturation magnetic flux densities at 100°C, it is verified that the effect of the improvement provided by inclusion of Li to the saturation magnetic flux density is a specific effect obtainable in the high temperature range.

Next, attention will be focused on the minimum core loss values (Pcv) and the bottom temperatures (B.Temp.) shown in FIG. 9.

As shown in FIG. 9, inclusion of Li shifts the bottom temperature to the higher temperature side. Thus, it is verified that according to the ferrite materials of the present invention, by containing predetermined contents of Li, the bottom temperatures can be set within a range between 80 and 120°C, and the minimum core loss values in this temperature range can be made equal to or less than 1200 kW/m³.

In the case where Li is not contained, the bottom temperature is such low as 40°C. On the other hand, when the content of Li reaches 4 mol%, the bottom temperature can be set in a range between 80 and 120°C, but the core loss becomes such large as 1800 kW/m³ or more.

When attention is focused on the initial permeabilities (µi) shown in FIG. 9, it is found that samples Nos. 67 and 68 according to the present invention attained initial permeabilities such high as 700 or more.

From the above described results, it is found that inclusion of LiO_{0.5} in a ferrite sintered body within a range of less than 4 mol% can improve the saturation magnetic flux density at 100°C. Additionally, it is found that inclusion of a predetermined content of Li is effective for the purpose of allowing the bottom temperature to be set within a range between 80 and 120°C and making the minimum core loss value in this temperature range equal to or less than 1200 kW/m³.

### (Example 10)

An experiment carried out for checking the preferable composition in the Mn-Zn-Li based ferrite is described as Example 10.

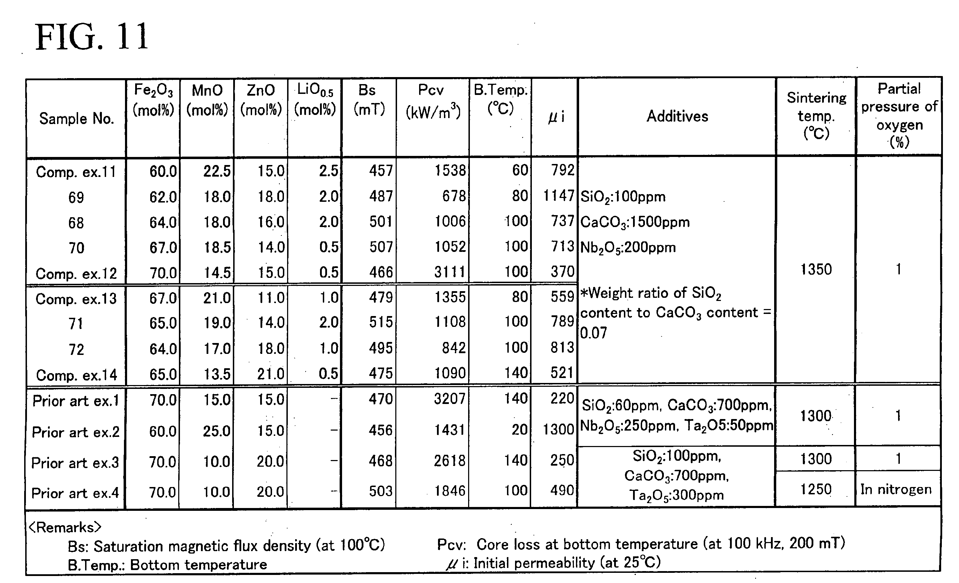

The ferrite cores having the compositions shown in FIG. 11 were prepared through the same steps as in Example 9, and the properties and the like were measured in the same way as in Example 9. The results obtained are also shown in FIG. 11.

Additionally, FIG. 11 shows, under the headings of Prior Art Examples 1 to 4, the properties of the Mn-Zn based ferrite materials disclosed in Japanese Patent Laid-Open No. 2000-159523.

As shown in FIG. 11, the ferrite materials according to the present invention all can set the bottom temperatures within a range between 80 and 120°C, and simultaneously have the saturation magnetic flux densities of 480 mT or more which are higher than those of Prior Art Examples 1 to 3. Additionally, it is found that in the ferrite materials according to the present invention, the core losses are 1200 kW/m³ or less, and thus the core losses are reduced as compared to Prior Art Examples.

Although Prior Art Example 4 has attained a saturation magnetic flux density such high as 503 mT, the core loss thereof is such large as 1800 kW/m³ or more, and the initial permeability thereof also exhibits a value smaller than 500. On the contrary, according to the ferrite materials of the present invention, a saturation magnetic flux density of 480 mT or more, a core loss of 1200 kW/m³ or less, and an initial permeability of 600 or more can be simultaneously provided.

In Comparative Example 11, samples Nos. 69, 68 and 70, and Comparative Example 12, the content of Fe₂O₃ is increased in this order. It is found that, among these comparative examples and samples, in the case where the content of Fe₂O₃ is 60.0 mol% to be smaller than the range of the present invention and in the case where the content of Fe₂O₃ is 70.0 mol% to be larger than the range of the present invention, the saturation magnetic flux densities are low and the core losses are large.

Next, in Comparative Example 13, samples Nos. 71 and 72, and Comparative Example 14, the content of ZnO is increased in this order. It is found that, among these comparative examples and samples, in the case where the content of ZnO is 11.0 mol% to be smaller than the range of the present invention, the core loss is large. On the other hand, in the case where the content of ZnO is 21.0 mol% to be larger than the range of the present invention, the bottom temperature cannot be set within a range between 80 and 120°C.

From the above described results, it is verified that it is important to set the content of Fe₂O₃ in a range between 62 and 68 mol% and the content of ZnO in a range between 12 and 20 mol% for the purpose of enjoying the effects of high saturation magnetic flux density and the low core loss while the bottom temperature is being set within a range between 80 and 120°C. Also, as for the initial permeability (µi), the samples according to the present invention all exhibit such high values as 700 or more.

### (Example 11)

An experiment carried out for checking the preferable additive amounts of the first additives in the Mn-Zn-Li based ferrite is described as Example 11.

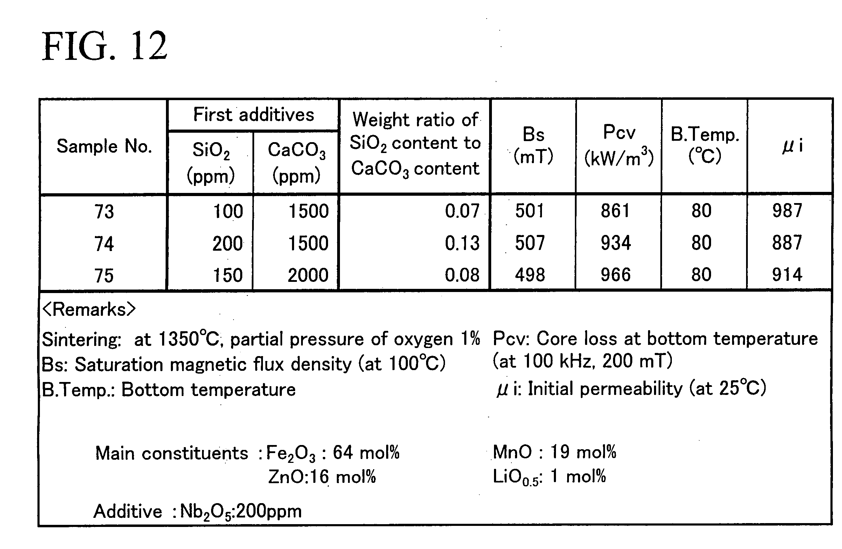

The ferrite cores having the compositions shown in FIG. 12 were prepared through the same steps as in Example 9, and the magnetic properties and the like were measured under the same conditions as in Example 9. The results obtained are also shown in FIG. 12.

In FIG. 12, inspection of samples Nos. 73 to 75 reveals that as the additive amounts of Si and Ca as first additives vary, the saturation magnetic flux density, the core loss and the initial permeability vary. From a comparison between sample No. 73 and sample No. 74, it can be said that Si is effective for the purpose of improving the saturation magnetic flux density. Also, from a comparison between sample No. 73 and sample No. 75, it is inferred that proper additive amounts can be specified even in the case where Si and Ca are added in combination, because sample No. 73 smaller in the additive amounts of both Si and Ca than sample No. 75 is higher in saturation magnetic flux density and lower in core loss than sample No. 75.

### (Example 12)

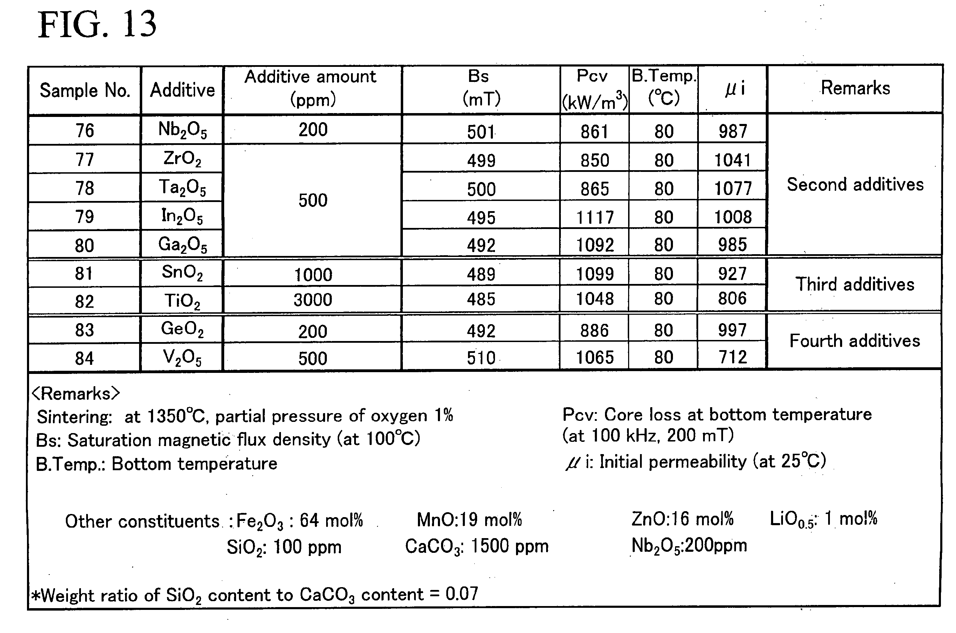

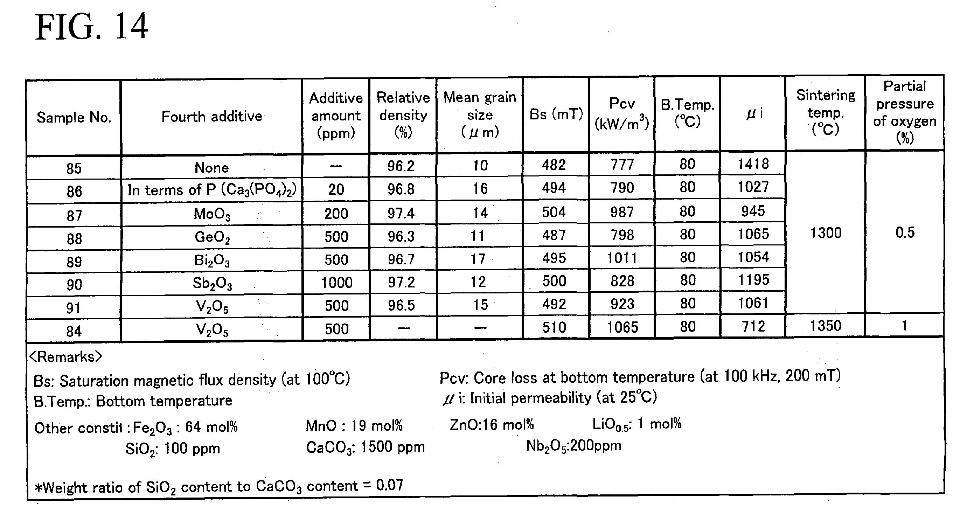

An experiment carried out for checking the variations of the magnetic properties and the like accompanying the addition of the second, third and fourth additives in the Mn-Zn-Li based ferrite is described as Example 12. The ferrite cores having the compositions shown in FIGS. 13 and 14 were prepared through the same steps as in Example 9. Additionally, the magnetic properties and the like were measured under the same conditions as in Example 9. The results obtained are also shown in FIGS. 13 and 14.

As shown in FIG. 13, even when the second additives (Nb₂O₅, ZrO₂, Ta₂O₅, In₂O₅, and Ga₂O₅), the third additives (SnO₂ and TiO₂), and the fourth additives (GeO₂ and V₂O₅) are added, a saturation magnetic flux density (Bs) of 480 mT or more and a core loss (Pcv) of 1200 kW/m³ or less are simultaneously provided.

Additionally, as shown in FIG. 14, samples Nos. 86 to 91 added with the fourth additives have attained the relative densities of 95% or more, the saturation magnetic flux densities (Bs) of 490 mT or more, and the core losses (Pcv) of 1100 kW/m³ or less even for the sintering temperature relatively such low as 1300°C.

Moreover, as shown in FIGS. 13 and 14, even in the cases where fourth additive are added, the bottom temperatures (B.Temp.) can be set within a desired range (between 60 and 130°C).

### (Example 13)

An experiment carried out for checking the preferable composition of the Mn-Zn-Ni-Li based ferrite is described as Example 13.

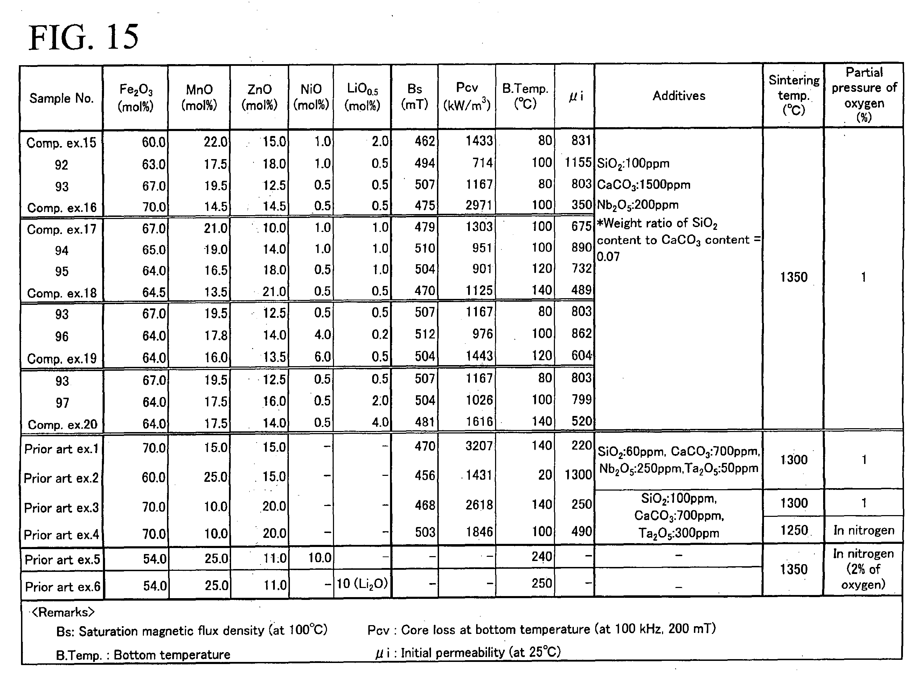

The ferrite cores having the compositions shown in FIG. 15 were prepared through the same steps as in Example 1 except that additionally a Li₂CO₃ powder was used. Additionally, the magnetic properties and the like were measured under the same conditions as in Example 1. The results obtained are also shown in FIG. 15. Incidentally, for the convenience of comparison, FIG. 15 shows the properties and the like of the Mn-Zn based ferrite materials disclosed in Japanese Patent Laid-Open No. 2000-159523 as Prior Art Examples 1 to 4, and the properties and the like of the Mn-Zn based ferrite materials disclosed in Japanese Patent publication No. 63-59241 as Prior Art Examples 5 and 6.

As shown in FIG. 15, the ferrite materials of the present invention all can set the bottom temperature within a range between 80 and 120°C. Moreover, the ferrite materials of the present invention can set the core loss at a value of 1300 kW/m³ or less which is lower than those of Prior Art Examples. Furthermore, the ferrite materials of the present invention can simultaneously provide a high saturation magnetic flux density of 480 mT or more and an initial permeability of 600 or more.

In Comparative Example 15, sample Nos. 92 and 93, and Comparative Example 16, the content of Fe₂O₃ is increased in this order. It is found that among these Comparative Examples and samples, in the case where the content of Fe₂O₃ is 60.0 mol% so as to be smaller than the range of the present invention and in the case where the content of Fe₂O₃ is 70.0 mol% so as to be larger than the range of the present invention, high saturation magnetic flux densities of 480 mT or more cannot be obtained and the core losses are large.

Next, in Comparative Example 17, sample Nos. 94 and 95, and Comparative Example 18, the content of ZnO is increased in this order. It is found that among these Comparative Examples and samples, in the case where the content of ZnO is 10.0 mol% so as to be smaller than the range of the present invention, the core loss is large. On the other hand, in the case where the content of ZnO is 21.0 mol% so as to be larger than the range of the present invention, the bottom temperature cannot be set within a range between 80 and 120°C.

In samples Nos. 93 and 96, and Comparative Example 19, the content of NiO is increased in this order. When attention is focused on these properties, it is found that the variation of the content of NiO varies the core loss and the saturation magnetic flux density. It is also found that as the content of NiO is increased, the bottom temperature is shifted to the higher temperature side.

It is necessary to set the content of NiO in consideration of the facts that sample No. 93 having a content of NiO of 0.5 mol% and sample No. 96 having a content of NiO of 4.0 mol% each exhibit a high saturation magnetic flux density, and the core loss of Comparative Example 19 having a content of NiO of 6.0 mol% exceeds 1300 kW/m³. The content of NiO is preferably in the approximate range of 0.2 to 5 mol%, and most preferably in the approximate range of 2 to 4 mol%.

In samples Nos. 93 and 97, and Comparative Example 20, the content of LiO_{0.5} is increased in this order. When attention is focused on these properties, it is found that the variation of the content of LiO_{0.5} varies the saturation magnetic flux density, the core loss, and the bottom temperature.

When attention is first focused on the bottom temperature, it is found that as the content of LiO_{0.5} is increased, the bottom temperature is shifted to the higher temperature side. Comparative Example 20 having a content of LiO_{0.5} of 4.0 mol% cannot set the bottom temperature within the desired range (between 60 and 130°C). Additionally, in consideration of the fact that Comparative Example 20 has a large core loss of 1600 kW/m³ or more, the content of LiO_{0.5} is set to be less than 4 mol%.

On the other hand, according to sample No. 93 having a content of LiO_{0.5} of 0.5 mol% and sample No. 97 having a content of LiO_{0.5} of 2.0 mol%, the bottom temperature can be made to fall within a desired range, namely, a range between 80 and 100°C. Moreover, samples Nos. 93 and 97 each have attained a high saturation magnetic flux density of 500 mT or more while keeping the core loss equal to or lees than 1200 kW/m³. Consequently, the content of LiO_{0.5} is preferably less than 4 mol%, and further preferably approximately 0.2 to 3 mol%.

From the results described above, it is verified that for the purpose of enjoying the effects of high saturation magnetic flux density and low core loss while setting the bottom temperature within a range between 60 and 130°C and furthermore between 80 and 120°C, it is important to set the content of Fe₂O₃ in a range between 62 and 68 mol%, the content of ZnO in a range between 12 and 20 mol%, the content of NiO in a range equal to or less than 5 mol% (not inclusive of 0), and the content of LiO_{0.5} in a range of less than 4 mol% (not inclusive of 0). Also, as for the initial permeability (µi), all the samples according to the present invention each exhibit a high value of 700 or more.

It is to be noted that FIG. 15 presents the bottom temperature of a Mn-Zn-Ni based ferrite material containing Ni in the main composition thereof, as Prior Art Example 5, and also presents the bottom temperature of a Mn-Zn-Li based ferrite material containing Li in the main composition thereof, as Prior Art Example 6. Samples Nos. 92 to 97 of the present invention containing NiO within a range of 5 mol% or less (not inclusive of 0) and LiO_{0.5} within a range of less than 4 mol% (not inclusive of 0) each have been able to set the bottom temperature within a range between 80 and 120°C, whereas Prior Art Examples 5 and 6 each have a high bottom temperature of 240°C or higher and both have not been able to set the bottom temperature within the range (between 60 and 130°C) desired by the present invention. From these facts, it is found that not only the selection of the constituents composing the main composition but also the combination of the constituents and the contents of the respective constituents largely affect the properties such as the bottom temperature.

### (Example 14)

An experiment carried out for checking the preferable additive amounts of the first additives in the Mn-Zn-Ni-Li based ferrite is described as Example 14.

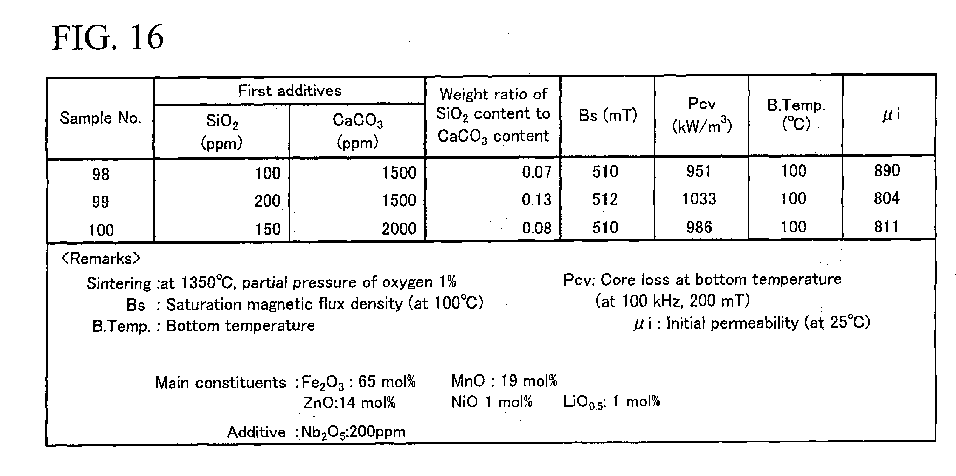

The ferrite cores having the compositions shown in FIG. 16 were prepared through the same steps as in Example 13, and the properties were measured in the same way as in Example 13. The results obtained are also shown in FIG. 16.

From FIG. 16, it is found that as the additive amounts of Si and Ca as first additives vary, the saturation magnetic flux density, the core loss, and the initial permeability vary. Thus, proper setting of the additive amounts of Si and Ca in proper ranges makes it possible to obtain a high saturation magnetic flux density of 500 mT or more while the core loss is being kept at 1200 kW/m³ or less.

### (Example 15)

An experiment carried out for checking the variations of the magnetic properties and the like accompanying the addition of the second, third and fourth additives in the Mn-Zn-Ni-Li based ferrite is described as Example 15.

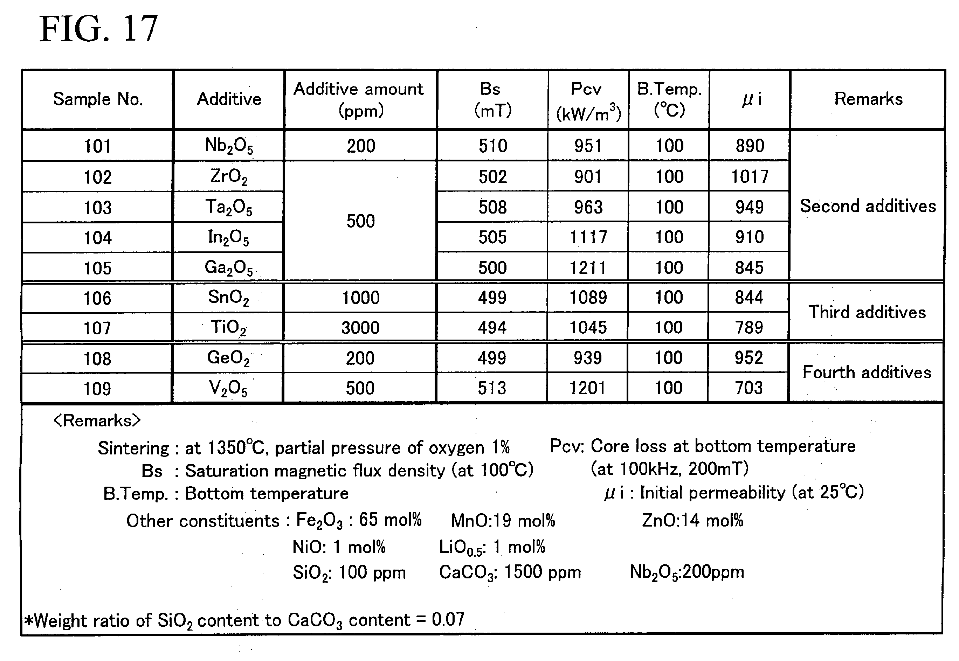

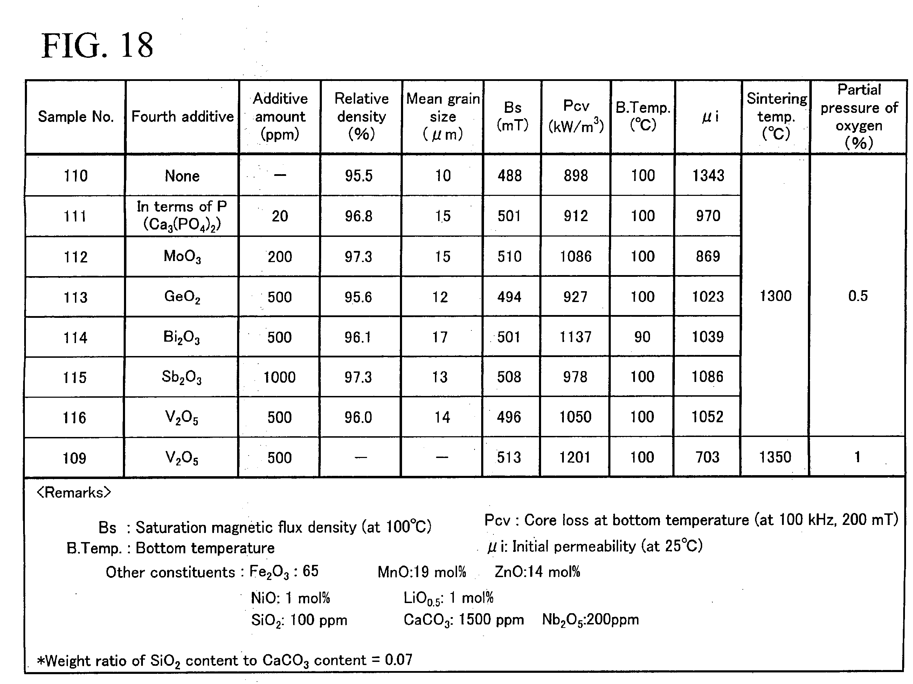

The ferrite cores having the compositions shown in FIGS. 17 and 18 were prepared through the same steps as in Example 13. Additionally, the magnetic properties and the like were measured under the same conditions as in Example 13. The results obtained are also shown in FIGS. 17 and 18.

As shown in FIG. 17, even addition of the second additives (Nb₂O₅, ZrO₂, Ta₂O₅, In₂O₅, and Ga₂O₅), the third additives (SnO₂ and TiO₂), or the fourth additives (GeO₂ and V₂O₅), the saturation magnetic flux densities of 490 mT or more and the core losses (Pcv) of 1300 kW/m³ or less are simultaneously provided.

Also, as shown in FIG. 18, samples Nos. 111 to 116 each containing a fourth additive each have attained a relative density of 95% or more, a saturation magnetic flux density (Bs) of 490 mT or more, and a core loss (Pcv) of 1200 kW/m³ or less even for the sintering temperature relatively such low as 1300°C.

Moreover, as shown in FIGS. 17 and 18, even in the cases where the fourth additives are added, the bottom temperatures (B.Temp.) can be set within the desired temperature range (between 60 and 130°C).

### Industrial Applicability

As described above in detail, according to the present invention, there can be obtained the provision of a ferrite material having a high saturation magnetic flux density in a high temperature range in the vicinity of 100°C, and having a low loss. Moreover, according to the present invention, there can be obtained a ferrite material in which the bottom temperature can be set in a temperature range (between 60 and 130°C) where common transformers and the like are used, and the saturation magnetic flux density in this temperature range is high and the loss is low.

## Claims

1. A ferrite material comprising a sintered body comprising as main constituents, 62 to 68 mol% of Fe₂O₃, 12 to 20 mol% of ZnO, 0.2 to 5 mol% of NiO, and the balance being substantially MnO; and
the saturation magnetic flux density thereof at 100°C is 450 mT or more (magnetic field for measurement: 1194 A/m), and the minimum core loss value thereof is 1200 kW/m³ or less (measurement conditions: 100 kHz, 200 mT).

2. A ferrite material comprising a sintered body comprising, as main constituents, 62 to 68 mol% of Fe₂O₃, 12 to 20 mol% of ZnO, less than 4 mol% (not inclusive of 0) of LiO_{0.5}, and the balance being substantially MnO.

3. The ferrite material according to claim 2, wherein:
the content of LiO_{0.5} in said sintered body is from 0.2 to 3 mol%.

4. A ferrite material comprising a sintered body comprising, as main constituents, 62 to 68 mol% of Fe₂O₃, 12 to 20 mol% of ZnO, 5 mol% or less (not inclusive of 0) of NiO, less than 4 mol% (not inclusive of 0) of LiO_{0.5}, and the balance being substantially MnO.

5. The ferrite material according to any one of claims 1 to 4, wherein:
said ferrite material comprises, as first additives, 250 ppm or less (not inclusive of 0) of Si in terms of SiO₂ and 2500 ppm or less (not inclusive of 0) of Ca in terms of CaCO₃.

6. A ferrite material comprising a sintered body comprising as main constituents, 62 to 68 mol% of Fe₂O₃, 12 to 23 mol% of ZnO, and the balance being substantially MnO; and as first additives, 80 to 250 ppm of Si in terms of SiO₂ and 800 to 2500 ppm of Ca in terms of CaCO₃; wherein:
the saturation magnetic flux density thereof at 100°C is 450 mT or more (magnetic field for measurement: 1194 A/m) and the minimum core loss value thereof is 1200 kW/m³ or less (measurement conditions: 100 kHz, 200 mT).

7. The ferrite material according to claim 5 or 6, wherein:
the weight ratio between said content of SiO₂ and said content of CaCO₃ (SiO₂ content/CaCO₃ content) is 0.04 to 0.25.

8. The ferrite material according to any one of claims 1, 2, 4 and 6, wherein:
said ferrite material comprises, as second additives, one or more selected from the group consisting of Nb₂O₅: 400 ppm or less (not inclusive of 0), ZrO₂: 1000 ppm or less (not inclusive of 0), Ta₂O₅ :1000 ppm or less (not inclusive of 0), In₂O₅: 1000 ppm or less (not inclusive of 0), and Ga₂O₅: 1000 ppm or less (not inclusive of 0).

9. The ferrite material according to any one of claims 1, 2, 4 and 6, wherein:
said ferrite material comprises, as third additives, one or both of SnO₂: 10000 ppm or less (not inclusive of 0) and TiO₂: 10000 ppm or less (not inclusive of 0).

10. The ferrite material according to any one of claims 1, 2, 4 and 6, wherein:
said ferrite material comprises, as fourth additives, one or more selected from the group consisting of a P compound: 35 ppm or less (not inclusive of 0) in terms of P, MoO₃: 1000 ppm or less (not inclusive of 0), V₂O₅: 1000 ppm or less (not inclusive of 0), GeO₂: 1000 ppm or less (not inclusive of 0), Bi₂O₃: 1000 ppm or less (not inclusive of 0), and Sb₂O₃: 3000 ppm or less (not inclusive of 0).

11. The ferrite material according to any one of claims 1, 2, 4 and 6, wherein:
the bottom temperature at which the core loss thereof exhibits the minimum value falls within a range between 60 and 130°C.

12. The ferrite material according to any one of claims 1, 2, 4 and 6, wherein:
the saturation magnetic flux density thereof at 100°C is 480 mT or more (magnetic field for measurement: 1194 A/m).

13. The ferrite material according to claim 12, wherein:
the initial permeability thereof at room temperature is 700 or more.

14. The ferrite material according to any one of claims 1, 2, 4 and 6, wherein:
said sintered body has a relative density of 93% or more and a mean grain size of 5 to 30 µm.

15. The ferrite material according to any one of claims 1, 2, 4 and 6, wherein:
the saturation magnetic flux density thereof at 100°C is 480 mT or more (magnetic field for measurement: 1194 A/m) and the minimum core loss value thereof is 1100 kW/m³ or less (measurement conditions: 100 kHz, 200 mT).

16. The ferrite material according to any one of claims 1, 2, 4 and 6, wherein:
the saturation magnetic flux density thereof at 100°C is 500 mT or more (magnetic field for measurement: 1194 A/m), the minimum core loss value thereof is 1000 kW/m³ or less (measurement conditions: 100 kHz, 200 mT), the bottom temperature at which the core loss thereof exhibits the minimum value is from 80 to 120°C, and the initial permeability thereof at room temperature is 800 or more.
